# EUROPEAN PATENT SPECIFICATION

(11) **EP 4 159 491 B1**
(45) Date of publication and mention of the grant of the patent: **25.06.2025**
(21) Application number: 21200359.4
(22) Date of filing: 30.09.2021
(51) Int. Cl.: B60C 29/06, F04B 39/10, F16K 15/20

(54) **NOZZLE ADAPTER FOR PRESTA VALVE**
DÜSENADAPTER FÜR EIN PRESTA-VALVE
ADAPTATEUR DE BUSE POUR VALVE PRESTA

(43) Date of publication of application: 05.04.2023
(73) Proprietor: Create Forever Industrial Co., Ltd., Changhua County 52654 (TW)
(72) Inventor: HSU, LUNG-KUO, 52654 Changhua County (TW)
(74) Representative: Lang, Christian

(56) References cited:
- CN-A- 107 542 988
- DE-A1- 102019 119 442
- US-A1- 2014 210 203
- US-A1- 2017 370 510

## Description

### BACKGROUND OF THE INVENTION

### Field of the Invention

The present invention relates to a nozzle adapter connected with an air inflator valve of a tire of a vehicle to inflate air into the tire, and more particularly to connect with and remove from a Presta valve at a high pressure quickly.

### Description of the Prior Art

To inflate air into a tire of a vehicle, an inflation valve having a check valve is fixed on the tire, and a pressurized pump inflates the air, wherein the pressurized pump has the nozzle adapter to communicate with the inflation valve. When desiring to connect the nozzle adapter with the inflation valve, a fixing device of the nozzle adapter is switched so that the nozzle adapter is connected with the inflation valve, and the fixing device is locked so that the nozzle adapter engages with the inflation valve, thus removing a hand to inflate the air.

The fixing device is used in following three manners:
A) Rotatable engaging manner, wherein a rubber of the nozzle adapter is pressed to engage the inflation valve tightly, thus avoiding using threads of the inflation valve. But, it is poor to engage the inflation valve by using the rubber, and the rubber is removable easily at a high pressure.
B) Rotatable screwing manner, wherein female threads of the nozzle adapter are rotated, and male threads of the inflation valve are rotated to screw with the nozzle adapter at the high pressure. However, rotating the female threads and the male threads are slow and troublesome.
C) Controlling a slidable block by using a fitting sleeve, wherein the slidable block has multiple teeth to engage with the male threads of the inflation valve, the fitting sleeve is pushed forward to control a movement of the multiple teeth of the slidable block, thus engaging the multiple teeth. When removing the multiple teeth from the male threads, the fitting sleeve is pulled backward to control a removal of the multiple teeth of the slidable block from the male threads when inflating the air at the high pressure. Nevertheless, such a controlling manner is operated inconveniently.

Furthermore, the nozzle adapter is operated manually to connect with the inflation valve, and it is required to operate the fixing device, thus having troublesome operation.

To overcome above-mentioned defects, the inventor invented a joint structure of an air valve disclosed in US 10,166,825 B2, wherein the nozzle adapter is connected with the inflation valve to inflate the air, and the inflation valve is inserted by a conduit of an outlet segment of the nozzle adapter to inflate the air easily. Thereafter, the nozzle adapter is removed after pressing a manual operation portion of a control element to have an easy operation, and multiple teeth engage with threads of the inflation valve securely at the high pressure. However, such a joint structure is merely applicable for Schrader valve instead of Presta valve.

The present invention has arisen to mitigate and/or obviate the afore-described disadvantages.

### SUMMARY OF THE INVENTION

The primary object of the present invention is to provide a nozzle adapter to be connected with a Presta valve which is operated with one hand easily and conveniently to connect with the Presta valve, such that after inflating air, the nozzle adapter is removed from the Presta valve with one hand, and the Presta valve is inserted into an outlet of the nozzle adapter automatically, wherein the nozzle adapter is removed from the Presta valve by using a controlling means easily and conveniently.

Another object of the present invention is to provide a nozzle adapter to be connected with a Presta valve which is applied to inflate the air at a high pressure, wherein when an inflation pressure is excessive, the Presta valve is pushed outward by the air pressure, and two engaging portions of two control elements are pulled to a screwing portion of the Presta valve so that two engaging portions engage with a screwing portion of the Presta valve more forcefully, thus using the Presta valve to inflate the air at the high pressure appropriately.

These objects have been solved by a nozzle adapter configured to be connected with a Presta valve as defined in claim 1. The subclaims define preferred embodiments of the adapter claimed.

To obtain above-mentioned aspect, a nozzle adapter provided by the present invention contains: a connection seat, at least one control element, at least one returning element, a seal cover, and a controlling means.

The connection seat includes an imaginary axis line defined on a center of the connection seat, an inlet defined on a first end of the imaginary axis line, an outlet formed on a second end of the imaginary axis line, an air stop ring received in the outlet, a conduit defined between the inlet and the outlet, an engagement position defined in the conduit, a coupling slot defined on the connection seat, and a stopping means formed outside the coupling slot. The coupling slot has at least one controlling trench defined outside the conduit, the at least one controlling trench extends to the engagement position via the inlet, and a respective controlling trench has a rotatable portion extending to the outlet adjacent to the air stop ring.

The at least one control element is accommodated in the at least one controlling trench. A respective control element has a fixing shaft extending on a first end thereof and connected with the rotatable portion, such that the at least one control element swings along the fixing shaft arcuately, the respective control element has an engaging portion extending from a second end thereof and has a controlled portion. The engaging portion is toothed and extends out of the engagement position.

The at least one returning element is arranged on the at least one control element so that the engaging portion is pushed into the engagement position.

The seal cover is fixed outside the coupling slot of the connection seat, and an airtight space is defined in the coupling slot by mating with the stopping means.

The controlling means is mounted on a center of the connection seat opposite to the inlet and in the conduit of the airtight space to move with the controlled portion. The controlling means extends out of the connection seat and is switched manually, when the controlling means is switched manually, the controlled portion is moved so that the engaging portion of the respective control element moves outward away from the engagement position.

The nozzle adapter is to be connected with the Presta valve, and the Presta valve includes an inlet portion, a screwing portion, and a neck portion. The Presta valve is inserted into the outlet, the neck portion is engaged matingly by the air stop ring of the Presta valve, and the screwing portion is engaged by the engaging portion at the engagement position. The screwing portion moves forward from the outlet to the inlet.

### BRIEF DESCRIPTION OF THE DRAWINGS

FIG. 1 is a perspective view showing the assembly of a nozzle adapter to be connected with a Presta valve according to a preferred embodiment of the present invention.
FIG. 2 is a cross-sectional perspective view showing the exploded components of the nozzle adapter to be connected with the Presta valve according to the preferred embodiment of the present invention.
FIG. 3 is a perspective view showing the assembly of a seal cover of the nozzle adapter to be connected with the Presta valve according to the preferred embodiment of the present invention.
FIG. 4 is a perspective view showing the assembly of a connection seat and a cap of the nozzle adapter to be connected with the Presta valve according to the preferred embodiment of the present invention.
FIG. 5 is a perspective view showing the exploded components of the connection seat and the cap of the nozzle adapter to be connected with the Presta valve according to the preferred embodiment of the present invention.
FIG. 6 is a cross sectional view showing the assembly of the nozzle adapter to be connected with the Presta valve according to the preferred embodiment of the present invention.
FIG. 7 is a cross sectional view showing the operation of the nozzle adapter to be connected with the Presta valve according to the preferred embodiment of the present invention.
FIG. 8 is another cross sectional view showing the operation of the nozzle adapter to be connected with the Presta valve according to the preferred embodiment of the present invention.
FIG. 9 is also another cross sectional view showing the operation of the nozzle adapter to be connected with the Presta valve according to the preferred embodiment of the present invention.
FIG. 10 is still another cross sectional view showing the operation of the nozzle adapter to be connected with the Presta valve according to the preferred embodiment of the present invention.
FIG. 11 is another cross sectional view showing the operation of the nozzle adapter to be connected with the Presta valve according to the preferred embodiment of the present invention.

### DETAILED DESCRIPTION OF THE PREFERRED EMBODIMENTS

The present invention will be clearer from the following description when viewed together with the accompanying drawings, which show, for purpose of illustrations only, a preferred embodiment in accordance with the present invention.

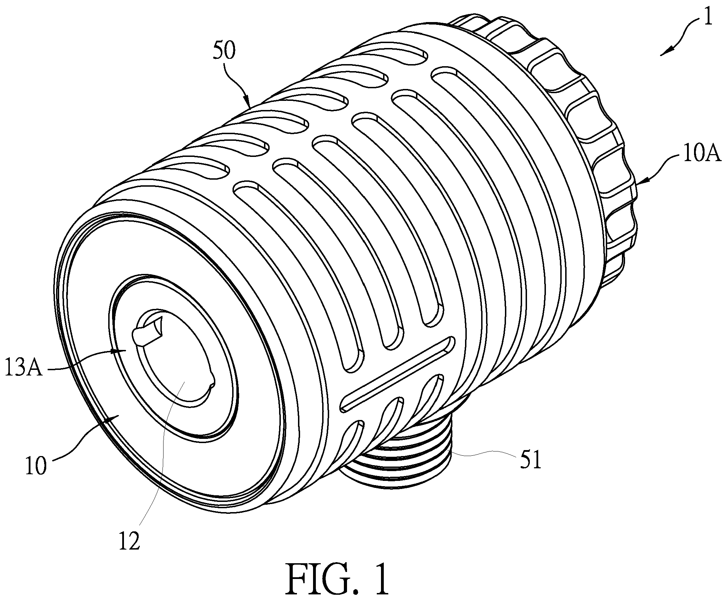

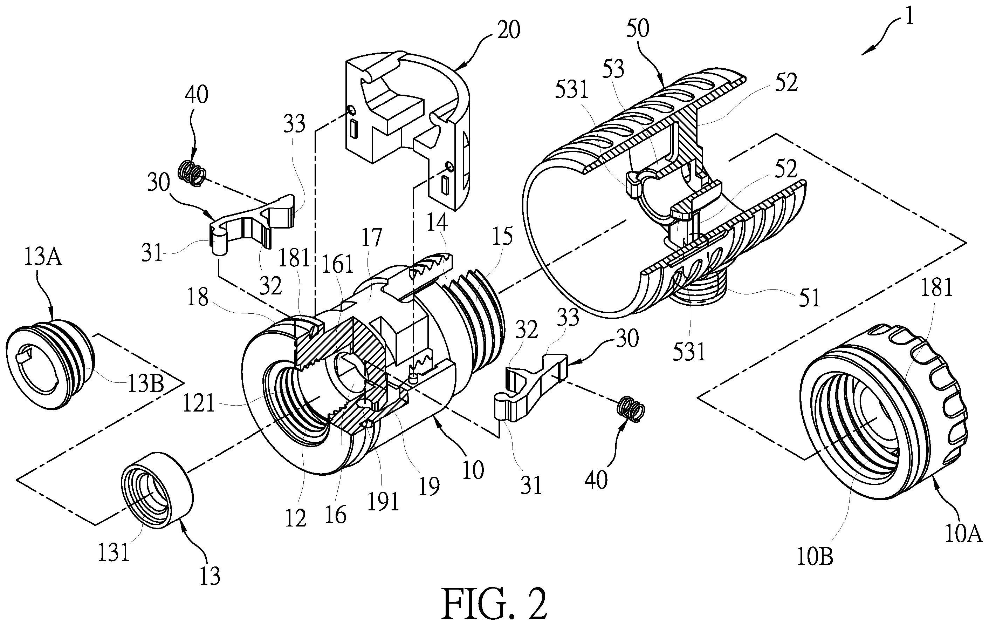

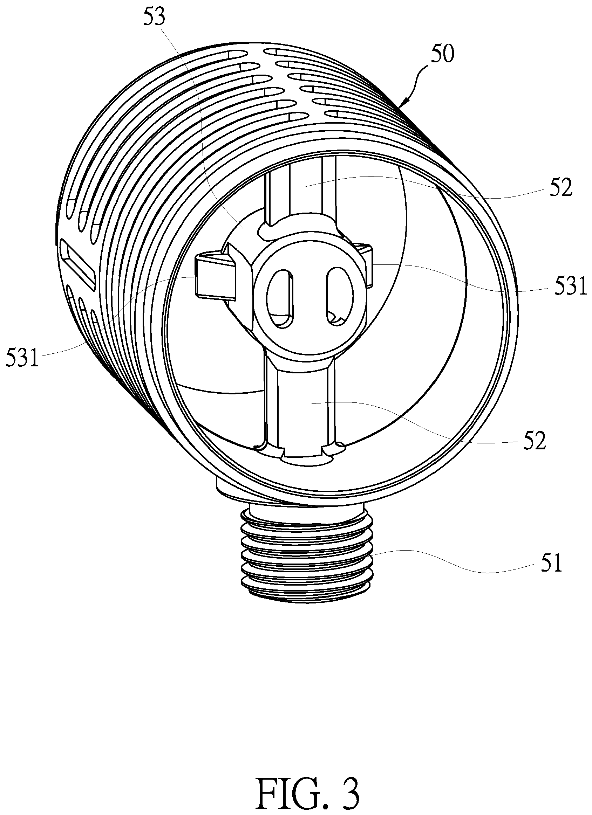

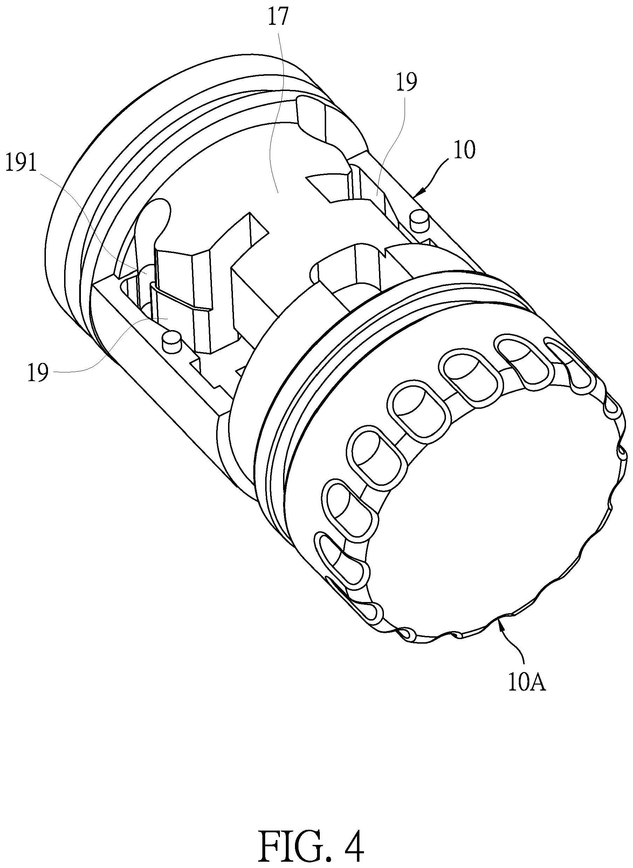

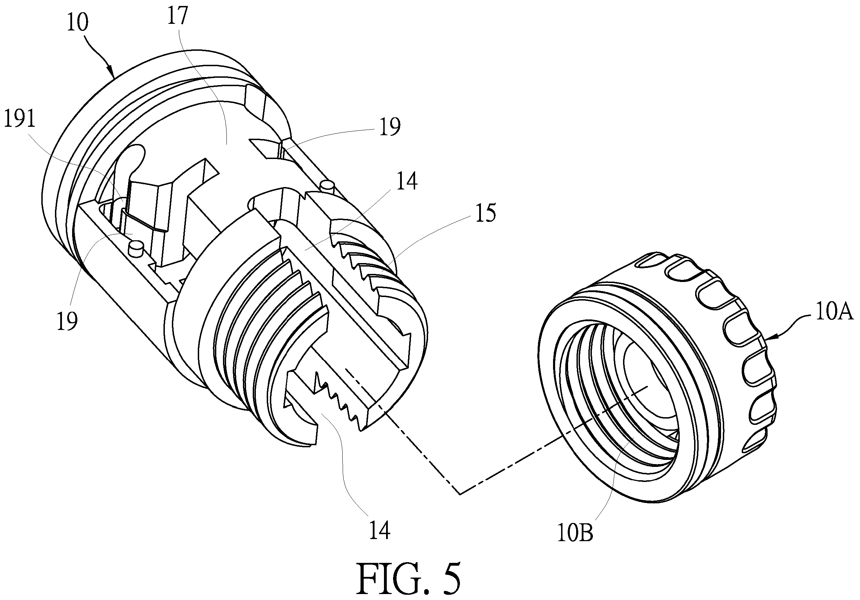

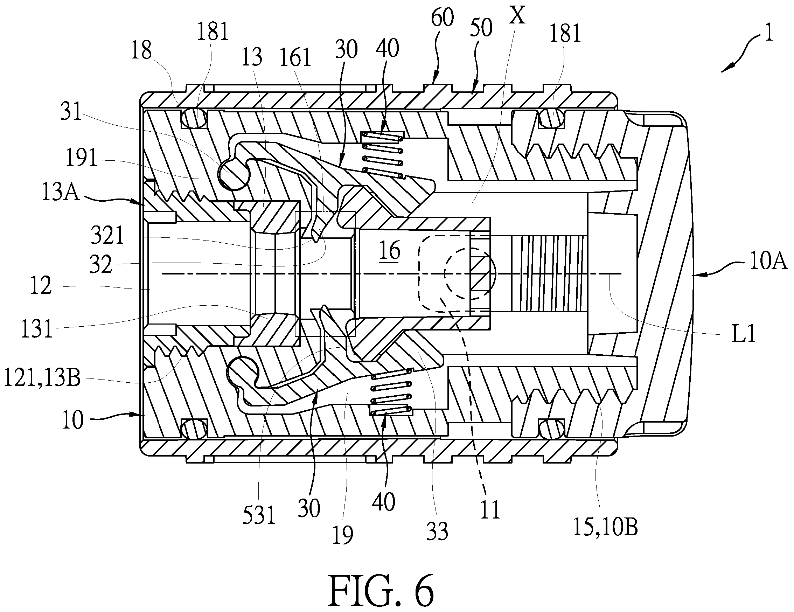

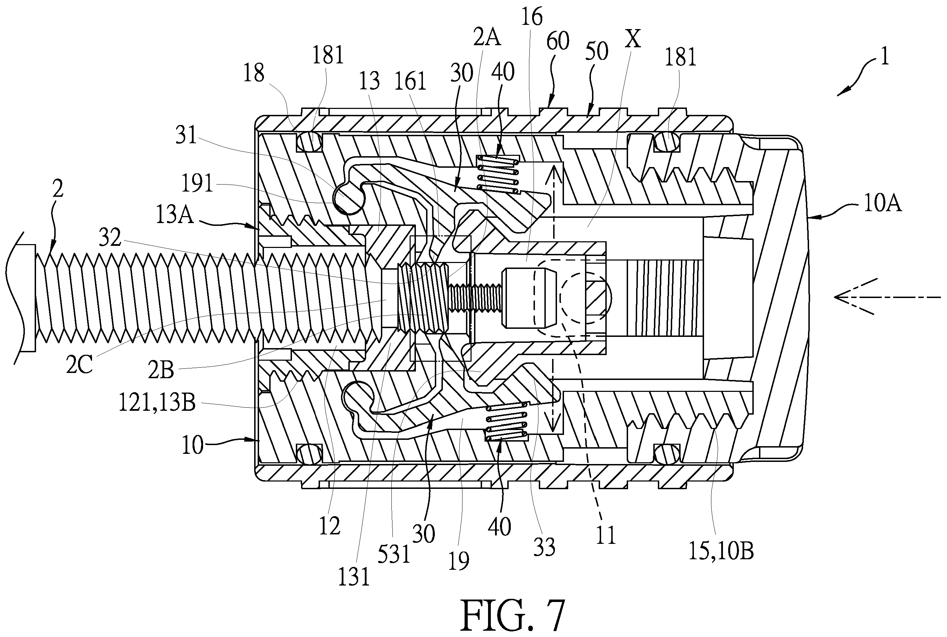

With reference to FIGS. 1-6, a nozzle adapter to be connected with a Presta valve according to a preferred embodiment of the present invention, a nozzle adapter 1 is communicated with the Presta valve 2 to inflate air, the Presta valve 2 comprises an inlet portion 2A, a screwing portion 2B, and a neck portion 2C (as shown in FIGS. 7-11). The nozzle adapter 1 includes a connection seat 10, a cap 10A, a lid 20, at least one control element 30, at least one returning element 40, a seal cover 50, and a controlling means 60.

The connection seat 10 includes an imaginary axis line L1 defined on a center thereof, an inlet 11 defined on a first end of the imaginary axis line L1, and an outlet 12 formed on a second end of the imaginary axis line L1, an air stop ring 13 and a locking ring 13A which are received in the outlet 12. The air stop ring 13 is made of rubber and has a protrusion 131 formed on an inner wall thereof, the locking ring 13A has a first threaded portion 13B formed on an outer wall thereof, the connection seat 10 has a second threaded portion 121 formed on an inner wall of the outlet 12 thereof, such that the first threaded portion 13B of the locking ring 13A is screwed with the second threaded portion 121 of the outlet 12 so that the locking ring 13A is fixed on the air stop ring 13. The connection seat 10 includes two grooves 14 defined on the first end of the imaginary axis line L1, a third threaded portion 15 screwed with the cap 10A, and a fourth threaded portion 10B formed on the cap 10A, wherein the fourth threaded portion 10B of the cap 10A is screwed with the third threaded portion 15, a conduit 16 defined between the inlet 11 and the outlet 12, an engagement position 161 defined in the conduit 16, a coupling slot 17 defined on the connection seat 10, and a stopping means 18 formed outside the coupling slot 17, wherein the stopping means 18 is two O-shaped rings 181, and the two O-shaped rings 181 are engaged on the cap 10A of the connection seat 10. The coupling slot 17 has at least one controlling trench 19 defined outside the conduit 16. In this embodiment, two controlling trenches 19 extend to the engagement position 161 via the inlet 11, wherein a respective controlling trench 19 has a rotatable portion 191 extending to the outlet 12 adjacent to the air stop ring 13.

The lid 20 covers the coupling slot 17 of the connection seat 10 to close the two controlling trenches 19.

In this embodiment, two control elements 30 are accommodated in the two controlling trenches 19, wherein a respective control element 30 has a fixing shaft 31 extending on a first end thereof and connected with the rotatable portion 191, such that the control element 30 swings along the fixing shaft 31 arcuately. The respective control element 30 has an engaging portion 32 extending from a second end thereof and has a controlled portion 33, wherein the engaging portion 32 is toothed and extends out of the engagement position 161, and the engaging portion 32 has a tilted guide face 321 formed proximate to the outlet 12.

In this embodiment, the two returning elements 40 are two spring arranged on the two control elements 30 so that two tilted guide faces 321 of the two control elements 30 are pushed into the engagement position 161 by the two returning elements 40.

The seal cover 50 is fixed outside the coupling slot 17 of the connection seat 10, and an airtight space X is defined in the coupling slot 17 by mating with the stopping means 18. The seal cover 50 is fitted on an outer wall of the connection seat 10 and mates with the two O-shaped rings 181. Furthermore, the seal cover 50 includes an inlet tube 51 received in the airtight space X and communicate with the inlet 11 and the conduit 16, wherein the seal cover 50 further includes two slidable posts 52 mounted on an inner wall thereof, and a cylindrical actuation portion 53 is defined between the two slidable posts 52. The cylindrical actuation portion 53 has two confining sections 531 configured to drive the two controlled portions 33 of the two control elements 30 to move, and the slidable posts 52 are slidably received and slide in the two grooves 14 of the connection seat 10 and are limited by the cap 10A.

The controlling means 60 is mounted on a center of the connection seat 10 opposite to the inlet 11 and in the conduit 16 of the airtight space X to move with the controlled portion 33, wherein the controlling means 60 extends out of the connection seat 10 and is switched manually. When the controlling means 60 is switched manually, the controlled portion 33 is moved. In this embodiment, the controlling means 60 is to slide the seal cover 50 on the connection seat 10. When the seal cover 50 moves away from the outlet 12, the two confining sections 531 of the seal cover 50 push the two controlled portions 33 of the two control elements 30 outward so that two engaging portions 32 of the two control elements 30 move outward away from the engagement position 161, and the two returning elements 40 are pressed.

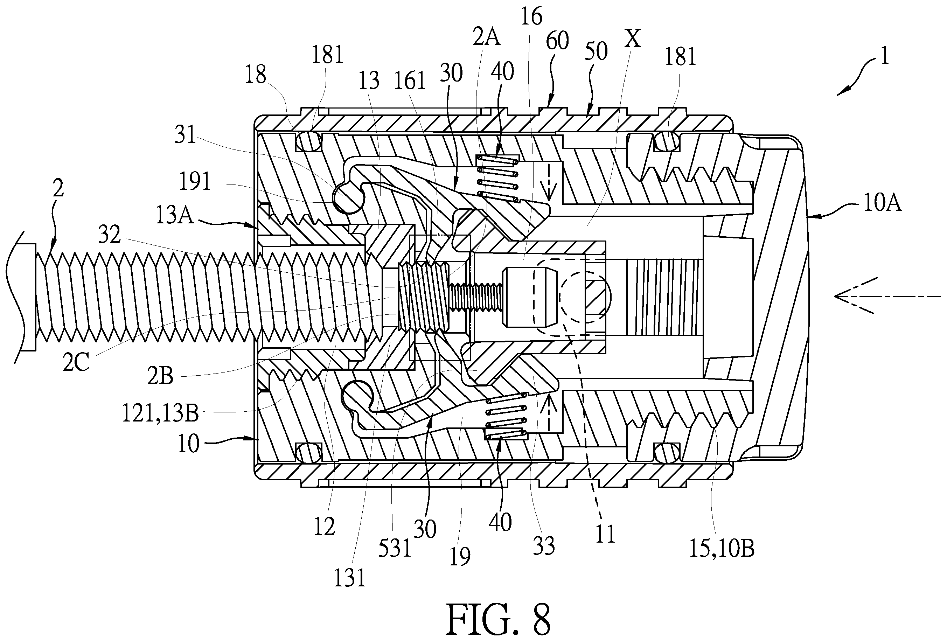

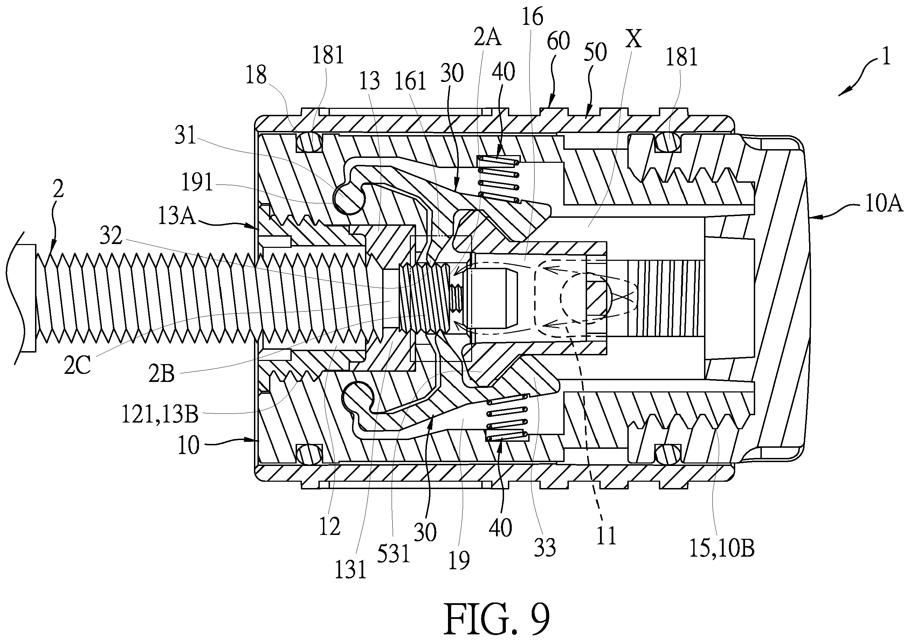

When inflating the air via the Presta valve 2 by using the nozzle adapter 1, as shown in FIGS. 7 and 8, the Presta valve 2 is manually inserted into the outlet 12 with one hand only, and the two engaging portions 32 of the two control elements 30 are pushed by the screwing portion 2B of the Presta valve 2 and the two returning elements 40 to open flexibly, and when the Presta valve 2 is inserted into the predetermined position, the neck portion 2C of the Presta valve 2 is engaged matingly by the air stop ring 13 to produce an airtight state, and the screwing portion 2B of the Presta valve 2 is engaged by the two engaging portions 32 of the two control elements 30 at the engagement position 161. When the nozzle adapter 1 supplies the air, as illustrated in FIG. 9, the air flow into the inlet portion 2A of the Presta valve 2 from the inlet tube 51 of the seal cover 50 via the inlet 11 and the conduit 16 of the connection seat 10 to expand an air valve (not shown) in the Presta valve 2 by way of an air pressure, thus inflating the air.

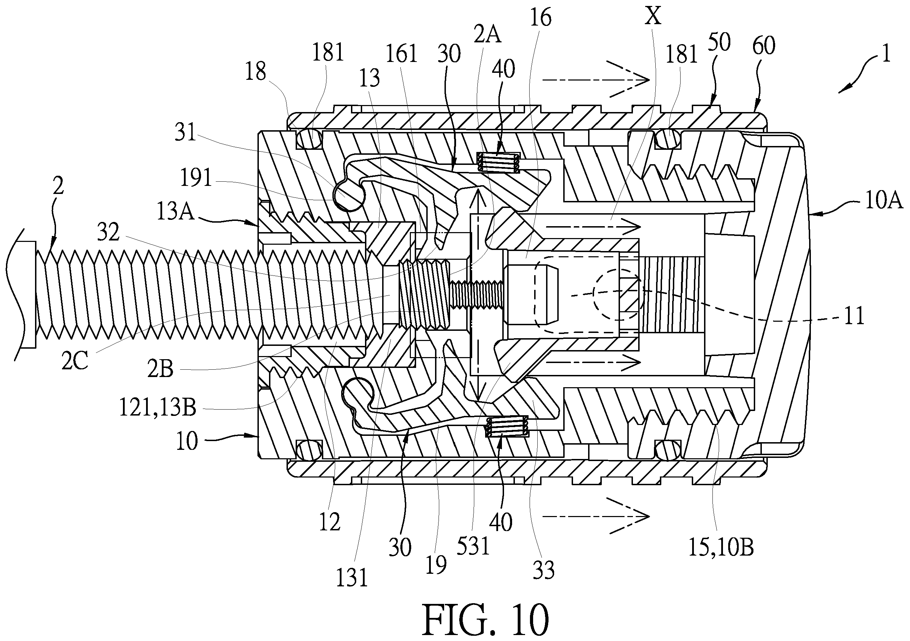

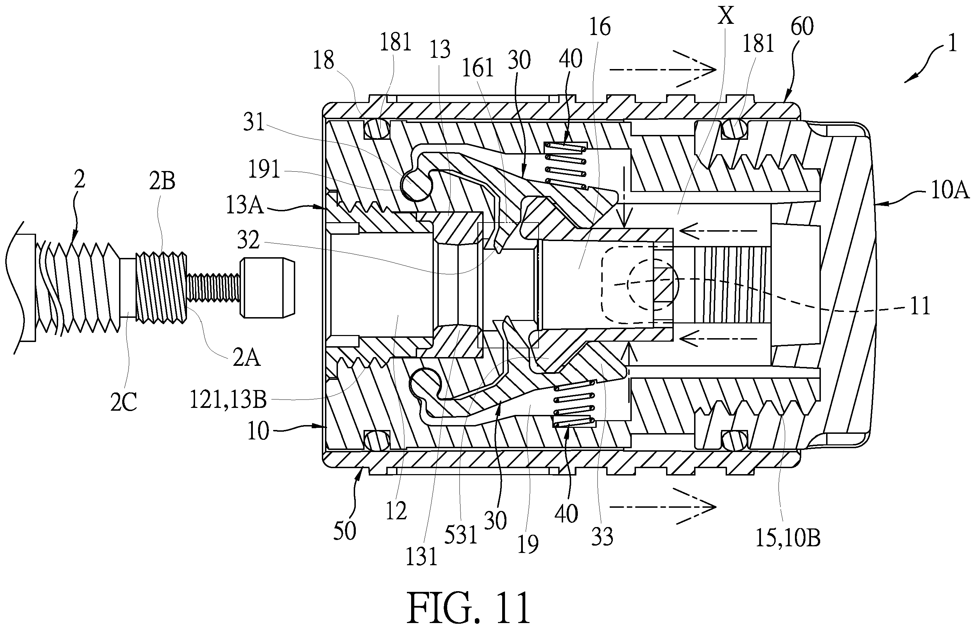

After inflating the air, as shown in FIG. 10, the seal cover 50 is moved away from the Presta valve 2 with one hand, wherein the seal cover 50 slides on the connection seat 10, the two confining sections 531 of the seal cover 50 push the two controlled portions 33 of the two control elements 30 outward so that the two returning elements 40 are pressed, and the two engaging portions 32 of the two control elements 30 move away from the engagement position 161 outward to remove from the screwing portion 2B of the Presta valve 2, as illustrated in FIG. 11. Thereafter, the seal cover 50 drives the connection seat 10 to move away from the Presta valve 2 so that the nozzle adapter 1 removes from the Presta valve 2, the two returning elements 40 push the two control elements 30 back to an original position, and the two control elements 30 drive the seal cover 50 back to an original position for next using operation. Thereby, the nozzle adapter to be connected with the Presta valve has advantages as follows:
1. The nozzle adapter 1 to be connected with the Presta valve 2 is operated with one hand easily and conveniently to connect with the Presta valve 2. After inflating the air, the nozzle adapter 1 is removed from the Presta valve 2 with one hand, and the Presta valve 2 is inserted into the outlet 12 of the nozzle adapter 1 automatically. The nozzle adapter 1 is removed from the Presta valve 2 by using the controlling means easily and conveniently.
2. The nozzle adapter 1 is applied to inflate the air at a high pressure. When an inflation pressure is excessive, the Presta valve 2 is pushed outward by the air pressure, and the two engaging portions 32 of the two control elements 30 are pulled to the screwing portion 2B of the Presta valve 2 so that the two engaging portions 32 engage with the screwing portion 2B of the Presta valve 2 more forcefully, thus using the Presta valve 2 to inflate the air at the high pressure appropriately.

While various embodiments in accordance with the present invention have been shown and described, it is clear to those skilled in the art that further embodiments may be made without departing from the scope of the present invention as defined in the appended claims.

## Claims

1. A nozzle adapter (1) configured to be connected with a Presta valve (2), said nozzle adapter comprising
a connection seat (10) including an imaginary axis line (L1) defined on a center of the connection seat (10), an inlet (11) defined on a first end of the imaginary axis line (L1), an outlet (12) formed on a second end of the imaginary axis line (L1), an air stop ring (13) received in the outlet (12), a conduit (16) defined between the inlet (11) and the outlet (12), an engagement position (161) defined in the conduit (16), a coupling slot (17) defined on the connection seat (10), and a stopping means (18) formed outside the coupling slot (17), the coupling slot (17) having at least one controlling trench (19) defined outside the conduit (16), wherein the at least one controlling trench (19) extends to the engagement position (161) via the inlet (11), and a respective controlling trench (19) has a rotatable portion (191) extending to the outlet (12) adjacent to the air stop ring (13);
at least one control element (30) accommodated in the at least one controlling trench (19), wherein a respective control element (30) has a fixing shaft (31) extending on a first end thereof and connected with the rotatable portion (191), such that the at least one control element (30) is adapted to swing along the fixing shaft (31) arcuately,
the respective control element (30) has an engaging portion (32) extending from a second end thereof and has a controlled portion (33), wherein the engaging portion (32) is toothed and extends out of the engagement position (161);
at least one returning element (40) arranged on the at least one control element (30) so that the engaging portion (32) is pushed into the engagement position (161);
a seal cover (50) fixed outside the coupling slot (17) of the connection seat (10), and defining an airtight space (X) in the coupling slot (17) by mating with the stopping means (18) ; and
a controlling means (60) mounted on a center of the connection seat (10) opposite to the inlet (11) and in the conduit (16) of the airtight space (X) is adapted to move with the controlled portion (33), wherein the controlling means (60) extends out of the connection seat (10) and is configured to be switched manually,
when the controlling means (60) is switched manually, the controlled portion (33) is moved so that the engaging portion (32) of the respective control element (30) moves outward away from the engagement position (161);
wherein the Presta valve (2) includes an inlet portion (2A), a screwing portion (2B), and a neck portion (2C), wherein the Presta valve (2) is adapted to be inserted into the outlet (12), the neck portion (2C) of the Presta valve (2) is adapted to be engaged matingly by the air stop ring (13), and the screwing portion (2B) is adapted to be engaged by the engaging portion (32) at the engagement position (161), wherein the screwing portion (2B) is adapted to move forward from the outlet (12) to the inlet (11).

2. The nozzle adapter (1) as claimed in claim 1 further comprising a lid (20) covering the coupling slot (17) of the connection seat (10) to close the at least one controlling trench (19).

3. The nozzle adapter (1) as claimed in claim 1 further comprising a locking ring (13A) which has a first threaded portion (13B) formed on an outer wall of the locking ring (13A), the connection seat (10) has a second threaded portion (121) formed on an inner wall of the outlet (12), such that the first threaded portion (13B) of the locking ring (13A) is screwed with the second threaded portion (121) of the outlet (12) so that the locking ring (13A) is fixed on the air stop ring (13).

4. The nozzle adapter (1) as claimed in claim 1, wherein the air stop ring (13) is made of rubber and has a protrusion (131) formed on an inner wall thereof.

5. The nozzle adapter (1) as claimed in claim 1 further comprising a cap (10A), wherein the connection seat (10) further includes a third threaded portion (15) formed on the first end of the imaginary axis line (L1), and the cap (10A) has a fourth threaded portion (10B) formed thereon, wherein the fourth threaded portion (10B) of the cap (10A) is screwed with the third threaded portion (15).

6. The nozzle adapter (1) as claimed in claim 1, wherein the stopping means (18) is two O-shaped rings, and the seal cover (50) is fitted on an outer wall of the connection seat (10) and mates with the two O-shaped rings, wherein the seal cover (50) includes an inlet tube (51) received in the airtight space and communicating with the inlet (11) and the conduit (16).

7. The nozzle adapter (1) as claimed in claim 5, wherein the connection seat (10) includes two grooves (14) defined on the first end of the imaginary axis line (L1), the seal cover (50) further includes two slidable posts (52) mounted on an inner wall thereof, and a cylindrical actuation portion (53) is defined between the two slidable posts (52), wherein the cylindrical actuation portion (53) has two confining sections (531) configured to drive the two controlled portions (33) of two control elements (30) to move, and the two slidable posts (52) are slidably received and slide in the two grooves (14) of the connection seat (10) and are limited by the cap (10A).

8. The nozzle adapter (1) as claimed in claim 1, wherein the controlling means (60) is configured to slide the seal cover (50) on the connection seat (10).

9. The nozzle adapter (1) as claimed in claim 1, wherein the engaging portion (32) of the respective control element (30) has a tilted guide face formed proximate to the outlet (12).

10. The nozzle adapter (1) as claimed in claim 1, wherein the at least one returning element (40) is a spring which is pressed.

## Patentansprüche

1. Düsenadapter (1) zur Verbindung mit einem Presta-Ventil, umfassend einen Anschlusssitz (10), der eine imaginäre Achse (L1), die in der Mitte definiert ist, einen Einlass (11) an einem ersten Ende der imaginären Achse (L1) und einen Auslass (12) an einem zweiten Ende der imaginären Achse (L1), einen Luftstoppring (13), der im Auslass (12) aufgenommen ist, einen Kanal (16), der zwischen dem Einlass (11) und dem Auslass (12) definiert ist, eine Eingriffsposition (161), die in dem Kanal (16) definiert ist, einen Kupplungsabschnitt (17), der auf dem Anschlusssitz (10) definiert ist, und ein Stoppmittel (18) aufweist, das außerhalb des Kupplungsabschnitts (17) angeordnet ist, wobei der Kupplungsabschnitt (17) mindestens eine Steuerausnehmung (19) bildet, die außerhalb des Kanals (16) definiert ist, wobei sich die mindestens eine Steuerausnehmung (19) über den Einlass (11) zur Eingriffsposition (161) erstreckt, und wobei eine entsprechende Steuerausnehmung (19) einen drehbaren Abschnitt (191) bildet, der sich bis zum Auslass (12) neben dem Luftstoppring (13) erstreckt; mindestens ein Steuerelement (30), das in der mindestens einen Steuerausnehmung (19) untergebracht ist, wobei das Steuerelement (30) eine Achse (31) an seinem ersten Ende bildet, die mit dem drehbaren Abschnitt (191) verbunden ist, sodass das Steuerelement (30) bogenförmig um die Achse (31) schwenkt kann, wobei das Steuerelement (30) über einen Eingriffsabschnitt (32) an seinem zweiten Ende und einen Steuerabschnitt (33) verfügt, und wobei der Eingriffsabschnitt (32) gezahnt ist und sich aus der Eingriffsposition (161) heraus erstreckt;
mindestens ein Rückholelement (40), das an dem mindestens einen Steuerelement (30) angeordnet ist, so dass der Eingriffsabschnitt (32) in die Eingriffsposition (161) gedrückt wird; und
eine Dichtungsabdeckung (50), die außerhalb des Kupplungsabschnitts (17) des Anschlusssitzes (10) befestigt ist, wobei durch das Stoppmittel (18) im Kupplungsabschnitt (17) ein luftdichter Raum (X) definiert ist; und
ein Steuermittel (60), das mittig am Anschlusssitz (10) gegenüber dem Einlass (11) und im Kanal (16) des luftdichten Raums (X) montiert ist und sich mit dem Steuerelement (33) bewegt, wobei das Steuermittel (60) aus dem Anschlusssitz (10) herausragt und manuell betätigt wird, und wobei beim manuellen Betätigen der Steuermittels (60) das entsprechende Steuerelement (33) bewegt wird, sodass sich der Eingriffsabschnitt (32) des entsprechenden Steuerelements (30) aus der Eingriffsposition (161) nach außen bewegt;
wobei das Presta-Ventil (2) aus einem Einlassabschnitt (2A), einem Gewindeabschnitt (2B) und einem Halsabschnitt (2C) besteht, wobei das Presta-Ventil (2) in den Auslass (12) eingesetzt wird, wobei der Halsabschnitt (2C) des Presta-Ventils (2) mit dem Luftstoppring (13) in Eingriff kommt, wobei der Gewindeabschnitt (2B) des Presta-Ventils (2) mit dem Eingriffsabschnitt (32) an der Eingriffsposition (161) in Eingriff kommt, und wobei sich der Gewindeabschnitt (2B) sich vom Auslass (12) zum Einlass (11) vorwärts bewegt.

2. Düsenadapter (1) nach Anspruch 1, **gekennzeichnet durch** einen Deckel (20), der den Kupplungsabschnitt (17) des Anschlusssitzes (10) abdeckt, um das mindestens eine Steuerausnehmung (19) zu verschließen.

3. Düsenadapter (1) nach Anspruch 1, **gekennzeichnet durch** einen Sicherungsring (13A), der an seiner Außenwand einen ersten Gewindeabschnitt (13B) aufweist, wobei der Anschlusssitz (10) an seiner Innenwand des Auslasses (12) einen zweiten Gewindeabschnitt (121) hat, wobei der erste Gewindeabschnitt (13B) des Sicherungsrings (13A) mit dem zweiten Gewindeabschnitt (121) des Auslasses (12) verschraubt wird, sodass der Sicherungsring (13A) am Luftstoppring (13) befestigt ist.

4. Düsenadapter (1) nach Anspruch 1, **dadurch gekennzeichnet, dass** der Luftstoppring (13) aus Gummi besteht und an seiner Innenwand einen Vorsprung (131) bildet.

5. Düsenadapter (1) nach Anspruch 1, **dadurch gekennzeichnet, dass** der Anschlusssitz (10) weiterhin einen dritten Gewindeabschnitt (15) am ersten Ende des imaginäre Achsenlinie (L1) aufweist, wobei ein vierter Gewindeabschnitt (10B) auf der Kappe (10A) ausgebildet ist, der mit dem dritten Gewindeabschnitt (15) verschraubt ist.

6. Düsenadapter (1) nach Anspruch 1, **dadurch gekennzeichnet, dass** das Stoppmittel (18) aus O-förmigen Ringen (181) besteht, wobei die Dichtungsabdeckung (50) an einer Außenwand des Anschlusssitzes (10) angebracht ist und an den beiden O-Ringen (181) anliegt, wobei die Dichtungsabdeckung (50) ein Einlassrohr (51) aufweist, das im luftdichten Raum aufgenommen ist und mit dem Einlass (11) und dem Kanal (16) kommuniziert.

7. Düsenadapter (1) nach Anspruch 5, **dadurch gekennzeichnet, dass** der Anschlusssitz (10) weiterhin zwei Aussparungen (14) am ersten Ende des imaginäre Achsenlinie (L1) aufweist, wobei die Dichtungsabdeckung (50) außerdem zwei verschiebbare Stützen (52) aufweist, die an ihrer Innenwand angeordnet sind, wobei zwischen den beiden verschiebbaren Stützen (52) ein zylindrischer Betätigungsabschnitt (53) definiert ist, wobei der zylindrische Betätigungsabschnitt (53) zwei Begrenzungsstücke (531) bildet, die die beiden Steuerabschnitte (33) der beiden Steuerelemente (30) bewegen können, wobei die verschiebbaren Stützen (52) verschiebbar in den beiden Aussparungen (14) des Anschlusssitzes (10) aufgenommen sind und durch die Kappe (10A) begrenzt werden.

8. Düsenadapter (1) nach Anspruch 1, **dadurch gekennzeichnet, dass** das Steuermittel (60) die Dichtungsabdeckung (50) auf dem Anschlusssitz (10) schiebt.

9. Düsenadapter (1) nach Anspruch 1, **dadurch gekennzeichnet, dass** der Eingriffsabschnitt (32) des entsprechenden Steuerelements (30) mit einer schrägen Führungsfläche (321) in der Nähe des Auslasses (12) versehen ist.

10. Düsenadapter (1) nach Anspruch 1, **dadurch gekennzeichnet, dass** das mindesens eine Rückholelement (40) eine Feder ist, die geddrückt wird.

## Revendications

1. Adaptateur pour embout (1) à raccorder à une valve Presta (2) **caractérisé par le fait qu'**il comprend :
un siège de raccordement (10) incluant une ligne d'axe imaginaire (L1) définie sur un centre du siège de raccordement (10), une entrée (11) définie sur une première extrémité de la ligne d'axe imaginaire (L1), une sortie (12) formée sur une seconde extrémité de la ligne d'axe imaginaire (L1), une bague d'arrêt de l'air (13) reçue dans la sortie (12), un conduit (16) défini entre l'entrée (11) et la sortie (12), une position d'engagement (161) définie dans le conduit (16), une fente de couplage (17) définie sur le siège de raccordement (10), et un dispositif d'arrêt (18) formé en dehors de la fente de couplage (17), la fente de couplage (17) comportant au moins une tranchée de contrôle (19) définie en dehors du conduit (16), la au moins une tranchée de contrôle (19) s'étend vers la position d'engagement (161) via l'entrée (11), et une tranchée de contrôle respective (19) comporte une partie rotative (191) s'étendant vers la sortie (12) adjacente à la bague d'arrêt de l'air (13) ;
au moins un élément de contrôle (30) placé dans la au moins une tranchée de contrôle (19), un élément de contrôle respectif (30) comporte un axe de fixation (31) s'étendant sur une première extrémité de celui-ci et raccordé à la partie rotative (191), de telle sorte que l'au moins un élément de contrôle (30) est adapté pour se balancer de manière précise le long de l'axe de fixation (31),
l'élément de contrôle respectif (30) comporte une partie d'engagement (32) s'étendant depuis une seconde extrémité de celui-ci et comporte une partie contrôlée (33), la partie d'engagement (32) est dentée et s'étend à l'extérieur de la position d'engagement (161) ;
au moins un élément de retour (40) disposé sur l'au moins un élément de contrôle (30) de telle sorte que la partie d'engagement (32) est poussée dans la position d'engagement (161) ;
un couvercle d'étanchéité (50) fixé en dehors de la fente de couplage (17) du siège de raccordement (10), et un espace étanche à l'air (X) étant défini dans la fente de couplage (17) est adapté pour correspondre au dispositif d'arrêt (18) ; et
un dispositif de contrôle (60) monté sur un centre du siège de raccordement (10) en face de l'entrée (11) et dans le conduit (16) de l'espace étanche à l'air (X) est adapté pour se déplacer avec la partie contrôlée (33), le dispositif de contrôle (60) s'étend à l'extérieur du siège de raccordement (10) et est adapté pour commuter manuellement ; lorsque le dispositif de contrôle (60) est commuté manuellement, la partie contrôlée (33) est déplacée de telle sorte que la partie d'engagement (32) de l'élément de contrôle respectif (30) se déplace vers l'extérieur en s'éloignant de la position d'engagement (161) ;
la valve Presta (2) inclut une partie d'entrée (2A), une partie vissable (2B), et une partie formant col (2C), la valve Presta (2) est adaptée pour être insérée dans la sortie (12), la partie formant col (2C) est adaptée pour être engagée de manière appariée avec la bague d'arrêt de l'air (13) de la valve Presta (2), et la partie vissable (2B) est adaptée pour être engagée par la partie d'engagement (32) sur la position d'engagement (161), la partie vissable (2B) est adaptée pour se déplacer vers l'avant depuis la sortie (12) vers l'entrée (11).

2. Adaptateur pour embout (1) selon la revendication 1 **caractérisé par le fait qu'**il comprend en outre un couvercle (20) recouvrant la fente de couplage (17) du siège de raccordement (10) pour fermer la au moins une tranchée de contrôle (19).

3. Adaptateur pour embout (1) selon la revendication 1 **caractérisé par le fait qu'**il comprend en outre une bague de verrouillage (13A) qui comporte une première partie filetée (13B) formée sur une paroi externe de la bague de verrouillage (13A), le siège de raccordement (10) comporte une deuxième partie filetée (121) formée sur une paroi interne de la sortie (12), de telle sorte que la première partie filetée (13B) de la bague de verrouillage (13A) est vissée sur la deuxième partie filetée (121) de la sortie (12) de manière à ce que la bague de verrouillage (13A) soit fixée sur la bague d'arrêt de l'air (13).

4. Adaptateur pour embout (1) selon la revendication 1, **caractérisé par le fait que** la bague d'arrêt de l'air (13) est composée de caoutchouc et comporte une saillie (131) formée sur une paroi interne de celle-ci.

5. Adaptateur pour embout (1) selon la revendication 1 **caractérisé par le fait qu'**il comprend en outre un capuchon (10A), le siège de raccordement (10) inclut en outre une troisième partie filetée (15) formée sur la première extrémité de la ligne d'axe imaginaire (L1), et le capuchon (10A) comporte une quatrième partie filetée (10B) formée sur celui-ci, la quatrième partie filetée (10B) du capuchon (10A) est vissée sur la troisième partie filetée (15).

6. Adaptateur pour embout (1) selon la revendication 1, **caractérisé par le fait que** le dispositif d'arrêt (18) consiste en deux anneaux en forme de O, et le couvercle d'étanchéité (50) est installé sur une paroi externe du siège de raccordement (10) et s'accouple avec les deux anneaux en forme de O, le couvercle d'étanchéité (50) inclut un tube d'entrée (51) reçu dans l'espace étanche à l'air et communique avec l'entrée (11) et le conduit (16).

7. Adaptateur pour embout (1) selon la revendication 5, **caractérisé par le fait que** le siège de raccordement (10) inclut deux rainures (14) définies sur la première extrémité de la ligne d'axe imaginaire (L1), le couvercle d'étanchéité (50) inclut en outre deux montants coulissants [52) montés sur une paroi interne de celui-ci, et une partie d'actionnement cylindrique (53) est définie entre les deux montants coulissants (52), la partie d'actionnement cylindrique (53) comporte deux sections de confinement (531) configurées pour entraîner les deux parties contrôlées (33) de deux éléments de contrôle (30) à se déplacer, et les deux montants coulissants (52) sont reçus de manière coulissante et coulissent dans les deux rainures (14) du siège de raccordement (10) et sont limités par le capuchon (10A).

8. Adaptateur pour embout (1) selon la revendication 1, **caractérisé par le fait que** le dispositif de contrôle (60) doit faire coulisser le couvercle d'étanchéité (50) sur le siège de raccordement (10).

9. Adaptateur pour embout (1) selon la revendication 1, **caractérisé par le fait que** la partie d'engagement (32) de l'élément de contrôle respectif (30) comporte une face de guidage inclinée formée à proximité de la sortie (12).

10. Adaptateur pour embout (1) selon la revendication 1, **caractérisé par le fait que** l'au moins un élément de retour (40) est un ressort qui est comprimé.
